# FASCICULE DE BREVET EUROPEEN

(11) **EP 3 536 585 B1**
(45) Date de publication et mention de la délivrance du brevet: **09.09.2020**
(21) Numéro de dépôt: 19155720.6
(22) Date de dépôt: 06.02.2019
(51) Int. Cl.: B62D 25/02, B62D 25/08, B62D 25/16

(54) **PANNEAU EN TOLE CONSTITUANT UNE DOUBLURE DE LA PARTIE ARRIÈRE D'UN COTÉ DE CAISSE D'UN VÉHICULE ET UN PASSAGE DE ROUE ARRIÈRE**
BLECHPANEEL, DAS EINE VERKLEIDUNG DES HINTEREN TEILS DER SEITENFLÄCHE EINES FAHRZEUGAUFBAUS UND EINEN HINTEREN RADKASTEN DARSTELLT
SHEET-METAL PANEL FORMING A LINING OF THE REAR PART OF A SIDE OF THE BODY OF A VEHICLE AND A REAR WHEEL ARCH.

(30) Priorité: 05.03.2018 FR 1851896
(43) Date de publication de la demande: 11.09.2019
(73) Titulaire: PSA Automobiles SA, 78300 Poissy (FR)
(72) Inventeur: LORETTE, Frederic, 78960 VOISINS LE BRETONNEUX (FR); PATRON, Cyril, 91650 BREUX JOUY (FR); GAMBA, Sandrine, 25750 SEMONDANS (FR)

(56) Documents cités:
- CN-A- 106 428 222
- DE-A1- 10 118 202
- DE-A1-102013 214 917
- FR-A1- 3 019 518

## Description

La présente invention se situe dans le domaine des véhicules et, notamment des véhicules automobiles en particulier utilitaire. L'invention concerne en particulier un panneau en tôle constituant à la fois une doublure de la partie arrière d'un côté de caisse d'un véhicule et un passage de roue arrière et les véhicules dotés de tels doublures et passages de roue arrière.

Le passage de roue arrière interne est une tôle formant la cloison latérale agencée entre l'espace destiné à recevoir une roue arrière de véhicule et l'intérieur du véhicule, à savoir son coffre ou son habitacle. Comparés aux passages de roues avant, les passages de roue arrière doivent subir des contraintes spécifiques à leur lieu d'implantation au sein dudit véhicule.

En particulier, le passage de roue arrière est proche de la tubulure de remplissage de carburant et de l'enveloppe de roue. Dans le cas d'un véhicule dont l'usage peut être de type utilitaire, le véhicule est souvent destiné à être chargé d'un gros volume au niveau du coffre. Notamment, la tendance vise à proposer un véhicule pouvant accueillir jusqu'à une palette entière d'1m³ par exemple. Lors du chargement d'un tel volume, par exemple à l'aide d'un transpalette, la palette ainsi chargée peut buter contre les parois latérales délimitant le volume du coffre et déformer celles-ci.

Ces parois latérales constituées notamment des passages de roue arrière peuvent se déformer lors du chargement, et la tôle déformée du passage de roue peut alors entrer en contact avec la tubulure de remplissage de carburant et/ou l'enveloppe de roue.

Il est classique pour rigidifier un élément en tôle de ménager des nervures dans la tôle. comme le montrent par exemple les documents DE 102013214917 A1, DE 10118202 A1 ou encore le document FR 3019518 A1. Ces nervures confèrent ainsi une plus grande rigidité à l'élément formé tel qu'un passage de roue. Un tel passage de roue est notamment visible dans le document EP 1386830. Toutefois, on a pu remarquer que ces nervures n'étaient pas suffisantes pour éviter une déformation du passage de roue suite à des chocs de chargement, qui peut alors entrer en contact avec la tubulure de carburant et/ou la roue.

L'invention a pour objectif de pallier cet inconvénient de l'art antérieur en proposant un nouveau passage de roue dont les prestations en matière de rigidité sont améliorées sans alourdir significativement ledit véhicule.

A cet effet, l'invention a pour objet un panneau en tôle constituant une doublure de la partie arrière d'un côté de caisse d'un véhicule et un passage de roue arrière, ledit passage de roues comportant des nervures de rigidification, caractérisé en ce que ces nervures de rigidification s'étendent de manière rayonnante sur ledit passage de roue depuis l'extrémité libre de la partie du panneau formant le passage de roue jusqu'à la zone de jonction dudit passage de roue avec la partie du panneau formant la doublure, au moins une nervure s'étendant au-delà de ladite zone de jonction dans la doublure.

De manière avantageuse, la doublure de côté de caisse et le passage de roue sont formés dans un même panneau en tôle, par exemple par un emboutissage d'une partie du panneau pour former le passage de roue. De ce fait, la disposition rayonnante des nervures de rigidification depuis l'extrémité libre du passage de roue jusqu'à la zone de jonction avec le reste du panneau, à savoir la partie doublure, et même au-delà pour au moins une nervure permet de renforcer avantageusement la rigidité dudit passage de roue et sa résistance à la déformation sous l'effet d'un choc lors d'un chargement et ce, sans qu'il soit nécessaire d'ajouter un élément de renfort au niveau dudit passage de roue.

De préférence, les nervures débutent à proximité du bord libre du panneau correspondant à la zone d'assemblage du passage de roue avec le plancher arrière du véhicule et s'étendent en rayonnant sur l'ensemble de la hauteur du passage de roue jusqu'à la partie du panneau formant doublure. Cette disposition rayonnante permet d'augmenter la raideur du passage de roue et de limiter les déformations pouvant survenir lors des chargements de charges lourdes difficilement manipulables.

Selon une forme de réalisation préférée, les nervures s'étendant sur la partie médiane du passage de roue et s'étendant sensiblement jusqu'au point le plus haut du passage de roue sont les nervures qui s'étendent jusque dans la partie doublure du panneau. Cette configuration confère une raideur augmentée au passage de roue évitant ainsi d'avoir à ajouter sur ledit passage de roue des éléments raidisseurs.

De manière à renforcer encore la raideur du passage de roue, certaines nervures présentent une profondeur plus grande dans la partie supérieure du passage de roue. Ainsi, de manière préférée, au moins une nervure présente, dans la partie supérieure du passage de roue à la zone de jonction avec la partie doublure du panneau, une profondeur supérieure à la profondeur de la nervure dans la zone du passage de roue proche de la zone d'assemblage avec le plancher du véhicule. Une telle nervure présente une zone d'approfondissement progressive de la nervure approximativement située dans la partie centrale de ladite nervure.

De préférence, la profondeur des nervures est généralement comprise entre 2 et 6 mm sur l'ensemble de la longueur d'une nervure ce qui confère une bonne rigidité au passage de roue. De manière préférée, l'ensemble des nervures présentent une telle profondeur comprise entre 2 et 6 mm dans la zone du passage de roue proche de la zone d'assemblage avec le plancher du véhicule. En ce qui concerne la ou les nervures présentant une profondeur plus grande au niveau de la partie supérieure du passage de roue dans la zone de jonction avec la partie doublure du panneau, cette partie de la nervure peut atteindre une profondeur allant jusqu'à 10 mm.

Ainsi, de préférence, les nervures présentent une même profondeur au début de la nervure dans la partie du passage de roue proche de la zone d'assemblage avec le plancher du véhicule. Puis, la profondeur de certaines nervures est augmentée de manière progressive, sur une zone, jusqu'à une profondeur supérieure au niveau de la partie supérieure du passage de roue. Une telle configuration permet d'augmenter la raideur du passage de roue tout en préservant l'espace dans lequel se loge l'enveloppe de roue et les tubulures de remplissage, puisque seules certaines nervures sont plus profondes et donc plus « encombrantes » dans l'espace extérieur délimité par le passage de roue dans lequel se trouve la roue et la ou les tubulures de remplissage.

Une nervure à profondeur évolutive peut également être une nervure s'étendant au-delà du passage de roue dans la partie doublure du panneau, renforçant encore la rigidité du passage de roue.

Dans le cas de certains véhicules, certaines nervures peuvent être plus courtes de manière à permettre le logement de plusieurs tubulures dans l'espace situé derrière le passage de roue.

L'invention concerne également un véhicule équipé d'un panneau selon l'invention.

L'invention sera bien comprise et d'autres aspects et avantages apparaîtront clairement à la lecture de la description qui suit, donnée à titre d'exemple, en référence aux dessins en annexe dans lesquels :
- La figure 1 est une vue montrant depuis l'intérieur de l'habitacle, la partie latérale arrière gauche d'un véhicule comportant un passage de roue selon l'invention ;
- La figure 2 est une vue de la partie latérale arrière de la figure 1 côté extérieur du véhicule ;

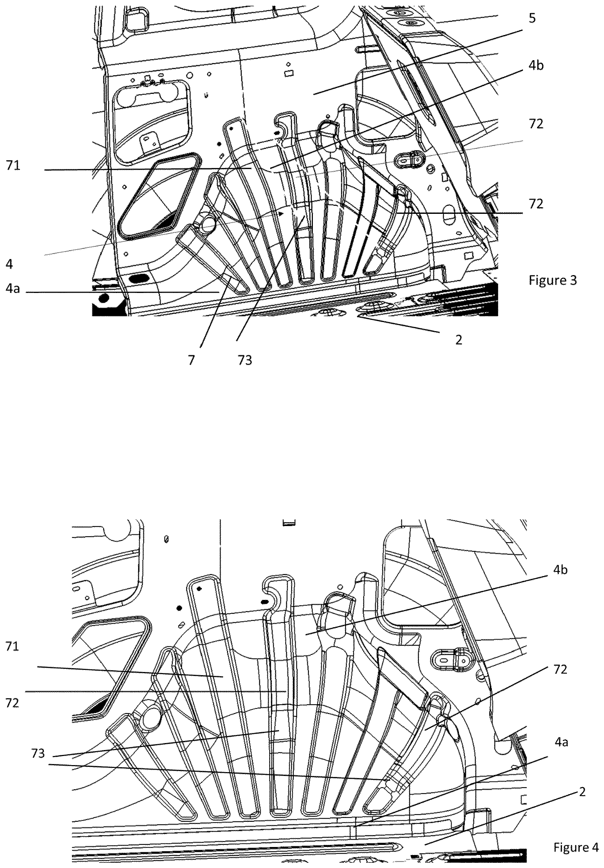

- La figure 3 est une vue agrandie de la partie latérale arrière de la figure 1 ; et
- La figure 4 représente une vue agrandie du passage de roue de la figure 3.

Dans la description qui suit, le terme « comprendre » est synonyme de « inclure » et n'est pas limitatif en ce qu'il autorise la présence d'autres éléments dans la structure, le véhicule ou le passage de roue auquel il fait référence. Il est entendu que le terme « comprendre » inclut les termes « consister en ». Sur les différentes figures, les mêmes références désignent des éléments identiques ou similaires. Les termes « avant », « arrière » s'entendront par rapport à l'orientation générale du véhicule. Le terme « avant » indiquera un positionnement orienté vers le devant d'un véhicule selon la direction horizontale et le terme « arrière » indiquera un positionnement orienté vers l'arrière d'un véhicule selon la même direction.

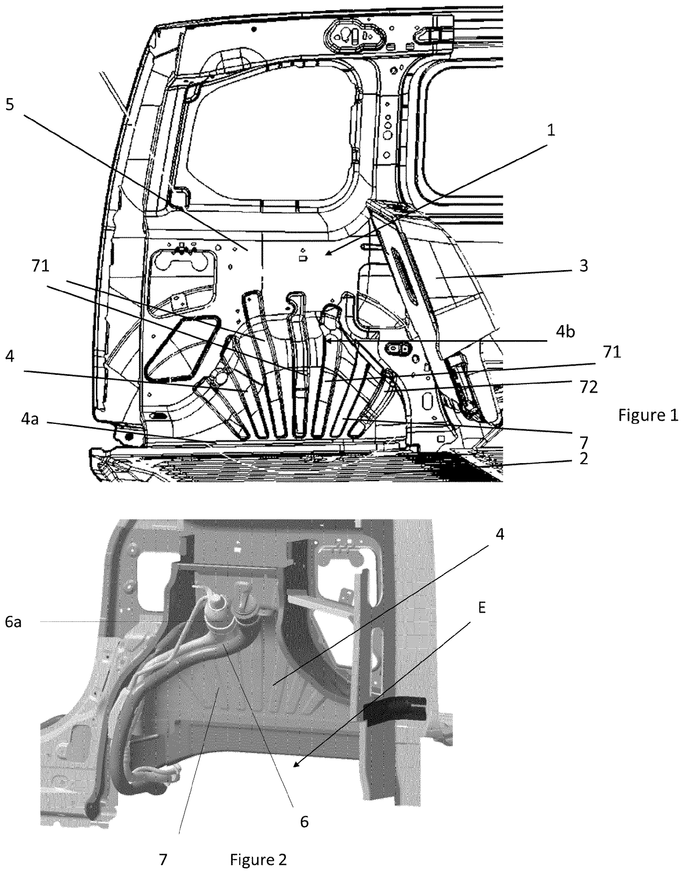

On se référera en premier lieu à la figure 1 montrant une partie latérale arrière gauche 1 d'un véhicule. La partie plancher arrière 2, les parois latérales gauche 1 et droite (non représentée) le pavillon de toit (non représenté) et l'arrière des sièges 3 de rangs deux du véhicule délimitent à peu près le volume du coffre du véhicule.

Chaque paroi latérale arrière 1 est de préférence constituée d'un panneau en tôle présentant une partie emboutie formant le passage de roue 4 et une partie formant doublure 5 du côté de caisse. Ce passage de roue arrière 4 forme la cloison latérale entre l'espace E destiné à recevoir une roue arrière de véhicule et l'intérieur du véhicule, à savoir son coffre ou son habitacle. Sur l'un des côtés arrière du véhicule, l'espace extérieur E défini par le passage de roue reçoit également une tubulure de remplissage du réservoir de carburant 6 et le cas échéant une tubulure de remplissage 6a d'un réservoir d'additif pour la dépollution de type SCR (Selective Catalyst Réduction à savoir réduction par catalyse sélective).

Lorsqu'on charge dans celui-ci une palette, par exemple dans le cas d'un véhicule utilitaire, il est possible qu'on vienne buter accidentellement contre l'une des parois latérales 1 au niveau de la partie du panneau formant le passage de roue 4. Il peut alors en résulter une déformation du passage de roue 4.

Le passage de roue 4 présente une forme sensiblement en demi-cercle, entourant la partie supérieure de la roue. Pour rigidifier ledit passage de roue 4 et lui permettre de résister à une déformation, on prévoit de ménager des nervures de rigidification 7 sur le passage de roue 4. Ces nervures 7 s'étendent depuis la partie inférieure 4a du passage de roue 4 se trouvant à proximité du plancher arrière 2 du véhicule et de manière radiale de sorte qu'une grande partie du passage de roue 4 présente des nervures 7. Les nervures 7 sont ménagées de manière équilibrée à la surface du passage de roue 4.

De manière préférée, ces nervures 7 s'étendent depuis la partie inférieure 4a du passage de roue 4 jusqu'à au moins la partie supérieure 4b du passage de roue 4 à la zone de jonction avec la partie de la paroi latérale 1 formant la doublure 5 de la face arrière du véhicule et même de préférence au-delà de ladite zone de jonction, certaines nervures 71 se terminant dans la partie doublure 5 de la paroi latérale 1.

Une telle répartition radiale des nervures 7 depuis la partie inférieure 4a du passage de roue 4 jusqu'à la partie doublure 5 de la paroi latérale 1 confère une raideur à la tôle constituant le passage de roue 4 et le flan de doublure de custode 5 permettant d'éviter les déformations lorsqu'un chargement vient buter contre ledit passage de roue 4.

On augmente ainsi la rigidité du passage de roue 4 et ce, sans avoir besoin de mettre en place un raidisseur additionnel, permettant un gain de matière et de processus, en évitant des étapes de montage supplémentaires.

Ces nervures 7 sont réalisées en creux sur la face côté intérieur du véhicule du passage de roue 4 et donc en saillie sur la face côté extérieur du passage de roue 4. A cet effet, certaines nervures 7 présentent une profondeur passant d'une valeur définie, par exemple équivalente pour l'ensemble des nervures 7, à une valeur de profondeur supérieure de manière progressive sur un tronçon de la nervure 7.

Ainsi la profondeur des nervures 7 est de préférence comprise entre 2 et 6 mm et cette profondeur peut atteindre jusqu'à 10 mm pour certaines nervures 72. Une zone d'approfondissement progressive 73 est approximativement située dans la partie centrale de la nervure 72.

Cette évolution progressive de la profondeur de certaines nervures 72 permet de renforcer la rigidité du passage de roue 4 tout en préservant l'espace E côté extérieur du passage de roue 4 dans lequel se loge la roue et la ou les tubulures de remplissage 6, 6a.

## Revendications

1. Panneau (1) en tôle constituant une doublure (5) de la partie arrière d'un côté de caisse d'un véhicule et un passage de roue arrière (4), ledit passage de roues (4) comportant des nervures de rigidification (7), **caractérisé en ce que** ces nervures de rigidification (7) s'étendent de manière rayonnante sur ledit passage de roue (4) depuis l'extrémité libre de la partie du panneau (1) formant le passage de roue (4) jusqu'à la zone de jonction dudit passage de roue (4) avec la partie du panneau formant la doublure (5), au moins une nervure (71) s'étendant, au-delà de ladite zone de jonction, dans la partie doublure (5) du panneau (1).

2. Panneau (1) selon la revendication 1, **caractérisé en ce que** les nervures (7) s'étendant sur la partie médiane du passage de roue (4) et s'étendant sensiblement jusqu'au point le plus haut du passage de roue (4) sont les nervures (71) qui s'étendent jusque dans la partie doublure (5) du panneau (1).

3. Panneau selon l'une des revendications 1 et 2, **caractérisé en ce que** la profondeur des nervures (7, 71) est de préférence comprise entre 2 et 6 mm.

4. Panneau (1) selon l'un des revendications 1 à 3, **caractérisé en ce qu'**au moins une nervure (72) présente, dans la partie supérieure (4b) du passage de roue (4), une profondeur supérieure à la profondeur de la nervure (72) dans la zone (4a) du passage de roue (4) proche de la zone d'assemblage avec le plancher (2) du véhicule.

5. Panneau (1) selon la revendication 4, **caractérisé en ce qu'**une nervure (72) présente une zone d'approfondissement progressive (73) de la nervure (72) approximativement située dans la partie centrale de ladite nervure (72).

6. Panneau (1) selon l'une des revendications 1 à 5, **caractérisé en ce que** l'ensemble des nervures (7, 71, 72) présentent une profondeur comprise entre 2 et 6 mm dans la zone (4a) du passage de roue (4) proche de la zone d'assemblage avec le plancher (2) du véhicule.

7. Panneau (1) selon les revendications 4 et 6, **caractérisé en ce qu'**une nervure (72) présente, dans la partie supérieure (4b) du passage de roue (4), une partie dont la profondeur atteint jusqu'à 10 mm.

8. Panneau (1) selon la revendication 7, **caractérisé en ce que** la nervure (72) est également une nervure (71) s'étendant au-delà du passage de roue (4) dans la partie doublure (5) du panneau (1).

9. Véhicule équipé d'un panneau selon l'une des revendications 1 à 8.

## Patentansprüche

1. Blechplatte (1), die eine Verkleidung (5) des hinteren Teils einer Karosserieseite eines Fahrzeugs und einen hinteren Radkasten (4) bildet, wobei der Radkasten (4) Versteifungsrippen (7) aufweist, **dadurch gekennzeichnet, dass** sich diese Versteifungsrippen (7) radial über den Radkasten (4) vom freien Ende des den Radkasten (4) bildenden Plattenteils (1) bis zum Verbindungsbereich des Radkastens (4) mit dem die Verkleidung (5) bildenden Plattenteil erstrecken, wobei sich mindestens eine Rippe (71) über den Verbindungsbereich hinaus in den Verkleidungsteil (5) der Platte (1) erstreckt.

2. Platte (1) nach Anspruch 1, **dadurch gekennzeichnet, dass** die Rippen (7), die sich über den mittleren Teil des Radkastens (4) erstrecken und sich im Wesentlichen bis zum höchsten Punkt des Radkastens (4) erstrecken, die Rippen (71) sind, die sich in den Verkleidungsteil (5) der Platte (1) erstrecken.

3. Platte nach einem der Ansprüche 1 und 2, **dadurch gekennzeichnet, dass** die Tiefe der Rippen (7, 71) vorzugsweise zwischen 2 und 6 mm liegt.

4. Paneel (1) nach einem der Ansprüche 1 bis 3, **dadurch gekennzeichnet, dass** mindestens eine Rippe (72) im oberen Teil (4b) des Radkastens (4) eine Tiefe aufweist, die größer ist als die Tiefe der Rippe (72) im Bereich (4a) des Radkastens (4) in der Nähe des Verbindungsbereichs zum Fahrzeugboden (2).

5. Paneel (1) nach Anspruch 4, **dadurch gekennzeichnet, dass** eine Rippe (72) einen progressiven Vertiefungsbereich (73) der Rippe (72) aufweist, der ungefähr im mittleren Abschnitt der Rippe (72) angeordnet ist.

6. Platte (1) nach einem der Ansprüche 1 bis 5, **dadurch gekennzeichnet, dass** alle Rippen (7, 71, 72) eine Tiefe zwischen 2 und 6 mm im Bereich (4a) des Radkastens (4) nahe dem Bereich der Montage mit dem Boden (2) des Fahrzeugs aufweisen.

7. Platte (1) nach den Ansprüchen 4 und 6, **dadurch gekennzeichnet, dass** eine Rippe (72) einen Abschnitt im oberen Teil (4b) des Radkastens (4) mit einer Tiefe von bis zu 10 mm aufweist.

8. Platte (1) nach Anspruch 7, **dadurch gekennzeichnet, dass** die Rippe (72) ebenfalls eine Rippe (71) ist, die sich über den Radkasten (4) im Verkleidungsteil (5) der Platte (1) hinaus erstreckt.

9. Ein Fahrzeug, das mit einer Tafel nach einem der Ansprüche 1 bis 8 ausgestattet ist.

## Claims

1. Sheet metal panel (1) constituting a lining (5) of the rear part of a body side of a vehicle and a rear wheel arch (4), said wheel arch (4) having stiffening ribs (7), **characterized in that** these stiffening ribs (7) extend radially over said wheel arch (4) from the free end of the panel portion (1) forming the wheel arch (4) to the junction area of said wheel arch (4) with the panel portion forming the lining (5), at least one rib (71) extending, beyond said junction area, into the lining portion (5) of the panel (1).

2. A panel (1) according to claim 1, **characterized in that** the ribs (7) extending over the middle portion of the wheel arch (4) and extending substantially to the highest point of the wheel arch (4) are the ribs (71) which extend into the lining portion (5) of the panel (1).

3. A panel according to one of claims 1 and 2, **characterized in that** the depth of the ribs (7, 71) is preferably between 2 and 6 mm.

4. A panel (1) according to one of claims 1 to 3, **characterised in that** at least one rib (72) in the upper part (4b) of the wheel arch (4) has a depth greater than the depth of the rib (72) in the region (4a) of the wheel arch (4) close to the region of connection to the vehicle floor (2).

5. A panel (1) according to claim 4, **characterized in that** a rib (72) has a progressive deepening area (73) of the rib (72) approximately located in the central portion of said rib (72).

6. Panel (1) according to one of claims 1 to 5, **characterized in that** all the ribs (7, 71, 72) have a depth of between 2 and 6 mm in the region (4a) of the wheel arch (4) close to the region of assembly with the floor (2) of the vehicle.

7. A panel (1) according to claims 4 and 6, **characterised in that** a rib (72) has a portion in the upper part (4b) of the wheel arch (4) with a depth of up to 10 mm.

8. A panel (1) according to claim 7, **characterized in that** the rib (72) is also a rib (71) extending beyond the wheel arch (4) in the lining part (5) of the panel (1).

9. A vehicle equipped with a panel according to one of claims 1 to 8.
